# EUROPEAN PATENT SPECIFICATION

(11) **EP 0 592 415 B1**
(45) Date of publication and mention of the grant of the patent: **27.03.1996**
(21) Application number: 91911774.7
(22) Date of filing: 20.06.1991
(51) Int. Cl.: F16K 7/17

(54) **VALVE ARRANGEMENT**
VENTILVORRICHTUNG
AGENCEMENT DE SOUPAPES

(30) Priority: 21.06.1990 SE 9002222
(43) Date of publication of application: 20.04.1994
(73) Proprietor: ABB FLÄKT AB, S-131 34 Nacka (SE)
(72) Inventor: BERGLUND, Svante, S-360 51 Hovmantorp (SE)
(74) Representative: Dahlstrand, Björn
(86) International application number: SE9100445
(87) International publication number: WO9119922

(56) References cited:
- EP-A- 0 004 526
- US-A- 4 033 732

## Description

This invention concerns a valve arrangement comprising a valve housing which has a valve chamber with an outlet and an inlet which is adapted to be connected to a pressure-medium source, and an opening communicating with the valve chamber; a control valve adapted, in closed position, to close the outlet of the valve chamber and, in open position, to open said outlet; and a main valve having, in said opening, a valve member which is movable in response to the pressure in the valve chamber between an outer closing position in which it is applied against a valve seat and an inner opening position in which it has been raised from the valve seat.

A prior-art valve arrangement of this type is used for imparting compressed-air pulses to a bag-shaped filter element in a filtering plant for cleaning contaminated gases. The compressed-air pulses are imparted to the interior of the bag-shaped filter element to clean the element by knocking off or shaking loose dust which has adhered to its walls during the cleaning of contaminated gases. The valve arrangement is mounted on a compressed-air tank whose wall is formed with a through hole through which extends the valve member of the main valve when in its closing position, so an to be sealingly applied against a valve seat arranged in the compressed-air tank, at one end of a pressure pipe. Further, the pressure pipe projects from the compressed-air tank so as to impart a compressed-air pulse to the interior of the filter element when the valve member is briefly moved to its inner opening position.

In this prior-art valve arrangement, the main valve is a circular membrane mounted between the valve housing and the wall of the compressed-air tank and covering both the valve opening and the hole in the wall of the compressed-air tank. The valve member is fixed to the outside of the membrane, and is surrounded by an annular membrane portion with throughgoing overflow holes forming the inlet of the valve chamber and communicating the compressed-air tank with the valve chamber. In the prior-art valve arrangement, the outlet of the valve chamber is an annular gap opening at the outside of the valve housing. The gap is closed when the control valve is in its closed position, and open when the control valve is in its open position.

When the valve member of the main valve is in its closing position, it is retained against the valve seat by the pressure in the valve chamber which communicates with the compressed-air tank via the overflow holes in the membrane. The pressure in the valve chamber thus is the same as in the compressed-air tank, but since the former acts on a larger membrane surface than the pressure in the compressed-air tank, the membrane is pressed out of the valve chamber so that the valve member is urged towards its closing position.

When the control valve is opened, the air in the valve chamber flows out through the annular gap, such that the main valve is opened by the valve member moving to its inner opening position. When, shortly afterwards, the control valve is closed, the pressure in the valve chamber is again built up via the overflow holes in the membrane so that the main valve is closed by the valve member moving to its closing position.

As should be apparent from the foregoing, the opening rate of the main valve, and consequently the rise time of the compressed-air pulse imparted to the filter element via the pressure pipe, is determined by the dimensions of the annular gap, and the closing rate of the main valve, and consequently the fall time of the compressed-air pulse, is determined by the dimensions of the overflow holes. In the prior-art valve arrangement, both the annular gap and the overflow holes are of given dimensions which cannot be altered. This means that the operational data of the valve arrangement for the rise and fall times of the compressed-air pulse are already fixed. To achieve optimal cleaning of the filter element, it is, however, necessary to adapt these operational data to the filtering material used in the filter element, as well as to the type of impurities occurring in the contaminated gases being filtered. For optimal cleaning Of the filter element, different combinations of filtering materials and impurities require compressed-air pulses of differently steep rises and falls. In addition, the prior-art valve arrangement has the disadvantage that the membrane easily breaks at the overflow holes.

The object of the present invention is to provide a valve arrangement whose operational data can be varied according to the filtering material in the filter element and the type of impurities in the filtered gases, said arrangement having no areas liable to fracture, in the form of overflow holes in the main valve.

According to the invention, this object is achieved by a valve arrangement which is of the type stated in the introduction to this specification and which is characterised in that the inlet of the valve chamber extends through the wall of the valve housing, that a control means is arranged for adjusting the pressure of the pressure medium supplied to the valve chamber, and/or that a control means is arranged for adjusting the flow velocity of the pressure medium supplied to the valve chamber, and/or that an adjustable throttle means is arranged in the outlet of the valve chamber.

A preferred embodiment of the invention will now be described in more detail below, reference being had to the accompanying drawings, in which
Fig. 1 is a sectional view of a valve arrangement according to the invention in closed position, and
Fig. 2 is a sectional view of the valve arrangement in open position.

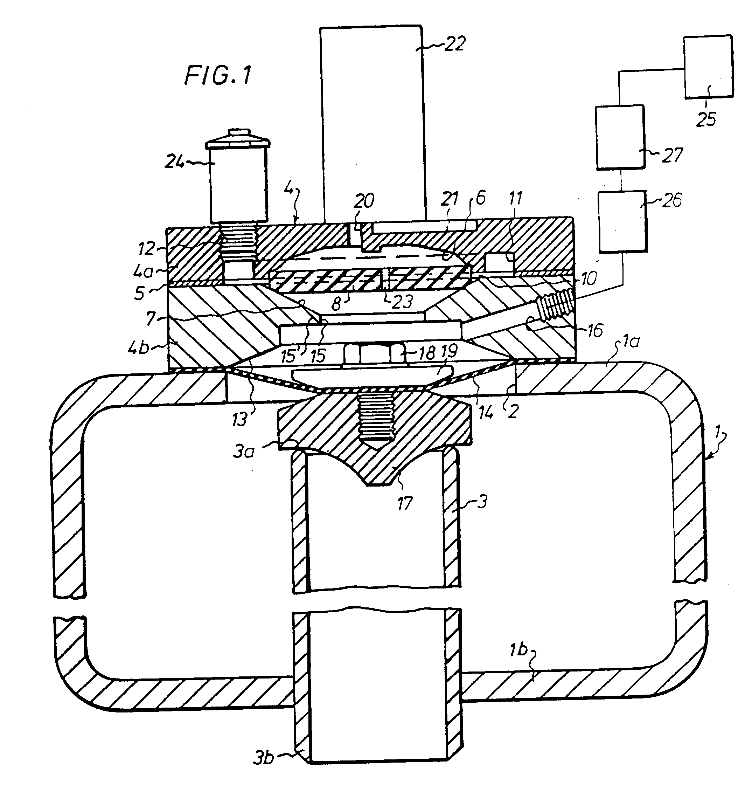

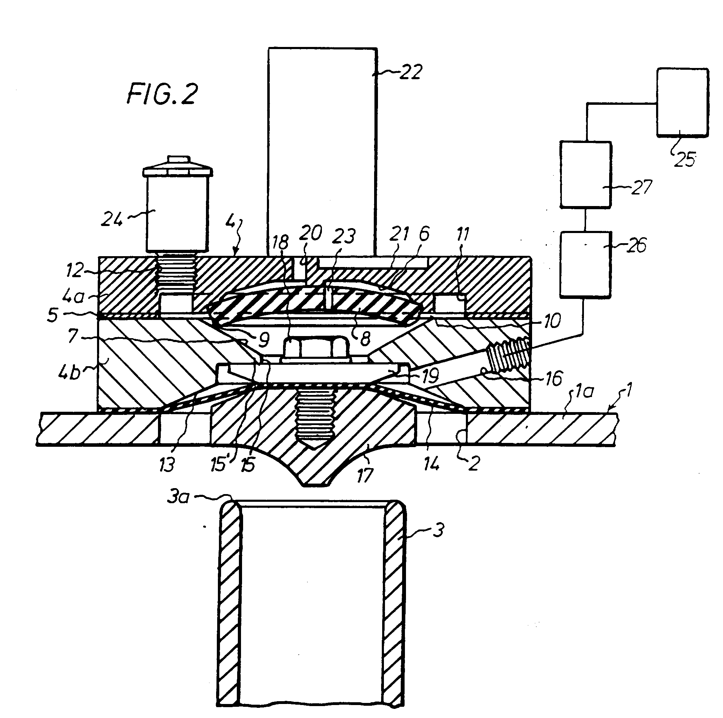

The valve arrangement of Figs 1 and 2 is employed for imparting compressed-air pulses to a vertically arranged, bag-shaped filter element (not shown) in a filtering plant for cleaning contaminated gases. The valve arrangement is mounted on a pressure-medium tank 1 above a circular hole 2 formed in the upper wall 1a thereof. The valve arrangement is fixed on the tank 1, in this case a compressed-air tank, by screws (not shown).

A vertical pressure pipe 3, which is coaxial with the hole 2, extends through the lower tank wall 1b into the compressed-air tank 1 and opens below the hole 2. The upper end of the pressure pipe 3 forms a valve seat 3a, and its lower end 3b opens outside the tank 1, directly above the opening of the bag-shaped filter element.

The valve arrangement has a valve housing 4 which is composed of two circular, coaxial parts, namely an upper part 4a and a lower part 4b, which are screwed together and have an intermediary gasket 5.

The upper part 4a is formed with a bowl-shaped, circular recess 6 at its underside, and the lower part 4b is formed with a bowl-shaped, circular recess 7 at its upper side. A flat, circular plate 8 of a flexible material, e.g. silicone rubber, is arranged between the two parts 4a and 4b so as to be circumferentially and sealingly applied against the walls of the two recesses 6 and 7 (Fig. 1). The plate 8 can be upwardly bent to the position shown in Fig. 2, in which it is no longer sealingly applied against the wall of the recess 7, and a circumferentially extending communication 9 has been established between the recess 7 and the annular gap 10 existing between the two parts 4a and 4b inwardly of the gasket 5. The gap 10 communicates with an annular groove 11 formed in the underside of the upper part 4a, straight above the gap 10. Moreover, the upper part 4a has a through bore 12 through which the groove 11 communicates with the outside of the valve housing 4.

The lower part 4b is formed with a bowl-shaped, circular recess 13 at its underside. The recess 13 has, in its lower portion forming an opening, the same diameter as the hole 2 in the upper wall la of the compressed-air tank 1. A circular membrane 14 is mounted between the lower part 4b and the upper wall 1a of the compressed-air tank 1 to form a partition between the recess 13 and the hole 2. The upper recess 7 and the lower recess 13 of the lower part 4b are interconnected by a stepped bore 15 coaxial therewith. The lower portion of the stepped bore 15 has a larger diameter than the upper portion, thereby forming an annular stop 15'. Together, the recesses 7 and 13 and the stepped bore 15 form a valve chamber between the plate 8 and the membrane 14. The valve chamber 7, 13, 15 has an inlet which consists of a substantially radial bore 16 in the lower part 4b, opening in that portion of the stepped bore 15 that has the larger diameter. The outlet of the valve chamber 7, 13, 15 is made up of the communication 9 (Fig. 2), the gap 10, the groove 11 and the bore 12.

At its underside, the membrane 14 supports a valve member 17 with which it forms the main valve of the valve arrangement. The valve member 17 is fixed on the membrane 14 by a screw 18 extending through a fastening plate 19 at the upper side of the membrane, and through the membrane into the valve member. In Fig. 1, the valve member 17 is in its outer closing position, in which it is sealingly applied against the valve seat 3a of the pressure pipe 3. In Fig. 2, the valve member 17 is shown in its inner opening position in which it has been raised from the valve seat 3a, and the fastening plate 19 is applied against the stop 15'.

The upper part 4a has an axially directed through bore 20 serving as outlet from the recess 6. Further, the upper part 4a is formed with a radial groove 21 in its upper side. An electromagnetic valve 22, only schematically shown, is mounted on the upper part 4a to establish communication between the bore 20 and the groove 21 when in open position, and breaking this communication when in closed position. In the closed position of the valve arrangement (Fig. 1), the electromagnetic valve 22 is in closed position. The plate 8 is formed with a throughgoing overflow hole 23 interconnecting the recesses 6 and 7 on either side of the plate. Further, the plate 8 and the electromagnetic valve 22 together form the control valve of the valve arrangement.

An adjustable throttle valve 24 is mounted in the bore 12. Also, an adjustable throttle valve (not shown) may be arranged to throttle the outflow from the bore 20 when the electromagnetic valve 22 is open.

The inlet of the valve chamber 7, 13, 15, i.e. the bore 16, is connected (this is only schematically shown) to a pressure-medium source 25 which in this case is a compressed-air source, via an adjustable pressure reducing valve 26 and an adjustable throttle valve 27. The bore 16 need not be connected to a separate pressure-medium source 25, but may be connected to the tank 1.

When the valve arrangement is to be opened from the closed position shown in Fig. 1 in order to impart a brief compressed-air pulse to the bag-shaped filter element via the pressure pipe 3, the electromagnetic valve 22 is opened to communicate the recess 6 with the surrounding atmosphere. The plate 8 is then bent to the position shown in Fig. 2, which may be carried out in damped fashion if the above-mentioned throttle valve serving to throttle the outflow from the bore 20 is employed. Thus, the outlet 9, 10, 11, 12 of the valve chamber 7, 13, 15 is opened (Fig. 2), thereby reducing the pressure in the valve chamber, so that the main valve is opened by the membrane 14, and consequently the valve member 17, being moved to the position shown in Fig. 2, in which the fastening plate 19 is applied against the stop 15' and the upper opening of the pressure pipe 3 has been uncovered.

When the valve arrangement is to be closed from the open position shown in Fig. 2, the electromagnetic valve 22 is closed, so that a pressure is built up in the recess 6 via the hole 23 in the plate 8. The plate 8 thus resumes its flat position (Fig. 1), in which the outlet 9, 10, 11, 12 of the valve chamber 7, 13, 15 is closed. Then, the pressure is again built up in the valve chamber 7, 13, 15, thereby closing the main valve. The opening of the valve arrangement, and consequently the rise time of the compressed-air pulse imparted to the bag-shaped filter element via the pressure pipe 3, can be varied as desired by suitable adjustment of the throttle valve 24. A substantial throttling results in a slow opening, and consequently a compressed-air pulse of long rise time. A less pronounced throttling, on the other hand, results in a more rapid opening, and consequently a compressed-air pulse of shorter rise time or steeper "leading edge". The closing of the valve arrangement, and consequently the fall time of the compressed-air pulse may, in corresponding manner, be varied as desired by suitable adjustment of the valves 26 and 27. An increase in pressure or flow rate gives a more rapid closing, and consequently a compressed-air pulse of shorter fall time or steeper "trailing edge".

In an alternative embodiment, the main valve is a piston which is slidably arranged in the lower part 4b of the valve housing 4. The piston thus replaces both the membrane 14 and the valve member 17 in the preferred embodiment described above.

## Claims

1. A valve arrangement comprising a valve housing (4) which has a valve chamber (7, 13, 15) with an outlet (9, 10, 11, 12) and an inlet (16) which is adapted to be connected to a pressure-medium source (25), and an opening communicating with the valve chamber; a control valve (8, 22) adapted, in closed position, to close the outlet of the valve chamber and, in open position, to open said outlet; and a main valve (14, 17) having, in said opening, a valve member (17) which is movable in response to the pressure in the valve chamber between an outer closing position in which it is applied against a valve seat (3a) and an inner opening position in which it has been raised from the valve seat (3a), **characterised** in that the inlet (16) of the valve chamber extends through the wall of the valve housing (4), that a control means (26) is arranged for adjusting the pressure of the pressure medium supplied to the valve chamber (7, 13, 15), and/or that a control means (27) is arranged for adjusting the flow velocity of the pressure medium supplied to the valve chamber (7, 13, 15), and/or that an adjustable throttle means (24) is arranged in the outlet (9, 10, 11, 12) of the valve chamber (7, 13, 15).

## Patentansprüche

1. Ventilvorrichtung, umfassend ein Ventilgehäuse (4), das eine Ventilkammer (7, 13, 15) mit einem Auslass (9, 10, 11, 12) und einem Einlass (16), der zur Verbindung mit einer Druckmediumquelle (25) vorgesehen ist, und eine mit der Ventilkammer in Verbindung stehende Öffnung aufweist; ein Regelventil (8, 22), das in geschlossener Position vorgesehen ist, um den Auslass der Ventilkammer zu schliessen und in offener Position den genannten Auslass zu öffnen; und ein Hauptventil (14, 17), das in der genannten Öffnung ein Ventilglied (17) hat, das in Abhängigkeit vom Druck in der Ventilkammer zwischen einer äusseren Schliessposition (B), in welcher es gegen einen Ventilsitz (3a) angelegt ist, und einer inneren Öffnungsposition (A), in welcher es vom Ventilsitz (3a) hochgehoben worden ist, bewegbar ist, dadurch **gekennzeichnet**, dass der Einlass (16) der Ventilkammer sich durch die Wand des Ventilgehäuses (4) erstreckt, dass ein Steuerelement (26) angeordnet ist, um den Druck des der Ventilkammer (7, 13, 15) zugeführten Druckmediums einzustellen, und/oder dass ein Steuerelement (27) angeordnet ist, um die Strömungsgeschwindigkeit des der Ventilkammer (7, 13, 15) zugeführten Druckmediums einzustellen, und/oder dass ein einstellbares Drosselglied (24) im Auslass (9, 10, 11, 12) der Ventilkammer (7, 13, 15) angeordnet ist.

## Revendications

1. Agencement de soupapes comprenant une boîte de soupape (4) qui comporte une chambre de soupape (7, 13, 15) ayant une sortie (9, 10, 11, 12) et une entrée (16) qui est destinée à être reliée à une source d'un milieu sous pression (25), et une ouverture étant en communication avec la chambre de soupape; une soupape de commande (8, 22) qui est conçue, lorsqu'elle se trouve dans une position fermée, pour fermer la sortie de la chambre de soupape et, lorsqu'elle se trouve dans une position ouverte, pour ouvrir ladite sortie; et une soupape principale (14, 17) ayant, dans ladite ouverture, un corps de soupape (17) qui peut se déplacer en fonction de la pression dans la chambre de soupape entre une position extérieure de fermeture, dans laquelle il est appliqué contre un siège de soupape (3a), et une position intérieure d'ouverture, dans laquelle il a été élevé à partir du siège de soupape (3a), **caractérisé** en ce que l'entrée (16) de la chambre de soupape s'étend à travers la paroi de la boîte de soupape (4), en ce qu'un moyen de commande (26) est agencé pour régler la pression du milieu sous pression qui est amené à la chambre de soupape (7, 13, 15), et/ou en ce qu'un moyen de commande (27) est agencé pour régler la vitesse d'écoulement du milieu sous pression qui est amené à la chambre de soupape (7, 13, 15), et/ou en ce qu'un moyen d'étranglement réglable (24) est prévu dans la sortie (9, 10, 11, 12) de la chambre de soupape (7, 13, 15).
